# EUROPEAN PATENT SPECIFICATION

(11) **EP 2 357 069 B1**
(45) Date of publication and mention of the grant of the patent: **28.11.2012**
(21) Application number: 10001532.0
(22) Date of filing: 15.02.2010
(51) Int. Cl.: B29C 33/02, B29C 33/38, B29C 35/02

(54) **Mould, apparatus and method for manufacturing a composite part including at least one fibre reinforced matrix**
Gussform, Werkzeug und Verfahren zur Herstellung eines Verbundteils, das mindestens eine faserverstärkte Matrix enthält
Moule, appareil et méthode pour fabriquer une pièce composite incluant au moins une matrice renforcée par fibre

(43) Date of publication of application: 17.08.2011
(73) Proprietor: SIEMENS AKTIENGESELLSCHAFT, 80333 München (DE)
(72) Inventor: Christiansen, Lars, Fuglsang, 9000 Aalborg (DK); Hansen, Svend Lynge Schultz, 9200 Aalborg SV (DK); Jacobsen, Ib, 9240 Nibe (DK); Jakobsen, Johnny, 9220 Aalborg East (DK); Jensen, Michael, 9000 Aalborg (DK)

(56) References cited:
- DE-A1-102006 058 198
- DE-U1-202009 010 891
- US-A- 5 158 132
- US-A- 5 190 715

## Description

The invention relates to a mould for manufacturing a composite part including at least one fibre reinforced matrix for manufacturing a composite part including at least one fibre reinforced matrix, in particular a wind turbine blade.

Composite parts show extraordinary mechanical properties. Thus, composite parts have gained popularity in high-performance products that need to be lightweight, yet strong enough to take harsh loading conditions such as aerospace components (wings or propellers), boat hulls, bicycle frames, racing car bodies or wind turbine blades. While the manufacturing of such composite parts including one or more fibre materials within a duroplastic or thermoplastic resin-like matrix, e.g. a wind turbine blade, usually a plurality of fibre composite layers are built up inside one or more moulds together with other structure parts and the resin-like matrix is injected into the mould(s) preferably under the application of low pressures.

EP 1 310 351 B1 refers to a method for manufacturing wind turbine blades in a closed mould with a mould core inside upper and lower mould parts forming a mould cavity in the shape of the wind turbine blade. After placing fibre material and core material in the mould cavity, a vacuum is applied and the curable resin-like matrix is injected via a filling pipe. To cure the resin-like matrix a special temperature profile has to be realised. Thus, diverse heating and cooling ramps and/or temperature plateaus need to be adjusted and monitored while the resin-like matrix cures forming the wind turbine blade.

A traditional mould structure as used in the above mentioned EP 1 310 351 B1 comprises a monolith fibre composite laminate of certain thickness having water pipes made of copper together with a copper mesh mounted underneath the laminate. The pipes are usually insulated with a foam material, consequently heating and cooling respectively is predominantly forced to progress through the laminate and not to the surroundings.

The water pipes made of copper together with the mesh are heavy components, which require a strong, that is thick laminate to carry the pipes and the mesh. Additionally, the laminate must ensure that temperature variations do not affect the shape of the moulded part(s). Thus, heat transfer from the water in the pipes to the outer surface of the mould and further in a surface of the mould structure is limited and slow due to the relatively low thermal conductivity of the used materials.

Hence, the only possibility for proper controlling of the heating or cooling is achieved by measuring the inflow temperature and the outflow temperature of the fluid flowing through the pipes.

Thus, controlling the heating and cooling processes is challenging. How much heating or cooling is needed and for how long temperature should be applied depends mainly on the mould thickness and the applied heating and cooling means.

So it is a decisive question how to reduce the laminate thickness of the mould to achieve a faster reacting thermal response for a better control of the process, without compromising the structural integrity of the mould.

Thin moulds give rise to unstable, mechanically weak mould structures sensitive to thermal variations and causing large differences in the shape of the moulded parts. In addition, thin moulds might easily break.

The object of the present invention is to provide an improved mould allowing a better controllability of the process of manufacturing of composite parts.

This is achieved by the above mentioned mould, comprising at least one thermal insulating core layer disposed between at least one outer laminate layer and at least one inner laminate layer and at least one heating and/or cooling means disposed in contact or in close proximity to the inner and/or outer laminate layer.

With the at least one thermal insulating core layer disposed between the at least one outer laminate layer and the at least one inner laminate layer the inventive mould comprises a sandwich-like panel or structure having two stiff, strong inner and outer laminate layers separated by the preferably light weight thermal insulating core layer. The separation of the inner and outer laminate layers, which actually carry the load, by a low density core increases the moment of inertia of the panel with little increase in weight producing an efficient structure. Mechanical properties of the sandwich depend on the thermal insulating core layer and inner and outer laminate layer materials as well as the thickness of the thermal insulating core layer and the inner and/or outer laminate layers respectively. The inventive mould gives rise to thinner inner and/or outer laminate layers in comparison to the mould disclosed within prior art.

The at least one heating and/or cooling means disposed in contact or in close proximity to the inner and/or outer laminate layer provides in addition with the thinner inner and/or outer laminate layers an improved heat transfer to and through the inner and/or outer laminate layers. In addition, shorter reaction and latent times (the time for the mould to be heated from an initial to a certain process dependent working temperature) are feasible. Thus, the mould can be faster heated or cooled, which has enormous effects on the part to be built. Steep temperatures ramps may be accomplished if need be for saving process energy. Hence, the inventive mould has better and faster adjustability of temperature and gives rise to a better controllable process.

It is possible that the mould comprises heating and/or cooling means disposed in contact or in close proximity either to the inner laminate layer or to the outer laminate layer. Likewise, heating and/or cooling means can be disposed in contact or in close proximity to both the inner and outer laminate layers, which is advantageous regarding the built-up of thermal induced stress, e.g. thermal loading of the mould caused by a temperature gradient between the inner and outer laminate layers. The way of arrangement and total number of heating and/or cooling means involved within the mould depends on the dimensions of the composite part and the employed materials.

Preferably, the heating and/or cooling means is disposed in at least one recess within the thermal insulating core layer and/or the inner and/or the outer laminate layer, or is exposed on top of the thermal insulating core layer or is moulded into the thermal insulating core layer and/or the inner and/or outer laminate layer. Hence, the invention discloses diverse possible locations for arranging the heating and/or cooling means, which can be deemed in combination or as alternatives. Recesses like grooves, cut-outs or the like openings for accommodating the heating and/or cooling means are possible within the thermal insulating core layer and/or the inner and/or outer laminate layers. Besides, it is possible, to dispose the heating and/or cooling means on top, e.g. on the surface or surface near areas of the thermal insulating core layer.

Similarly, moulding of the heating and/or cooling means into the thermal insulating core layer and/or the inner and/or outer laminate layers is feasible. All arrangements are under the premise, that the heating and/or cooling means provide proper and fast heat transfer to the inner and/or outer laminate layers and further to the composite part. The inventive mould can be tempered easily and fast, that is be adjusted to a desired temperature.

The heating and/or cooling means comprises at least one pipe for transporting a heating and/or cooling medium whereby preferably the pipes are at least partially encompassed by electrical heating wires. The pipes are wound through the mould preferably in a meander-like structure. The electrical heating wires may though also be places above or below the heating pipes. The inventive mould can be heated or cooled respectively by using different heating sources. One is a fluid heating and/or cooling media, whereby the heating and/or cooling means are built as pipes or the like transporting the liquid or gaseous or vaporous heating and/or cooling medium. Generally, any fluid which is capable to convey heat from a hot or cold source, either directly or through a suitable heating device, to a substance or space being heated or cooled is meant by heating and/or cooling media. As an example water is named because of its high heat capacity.

Second, the heating means can comprise electrical wires, thus, the mould is tempered through the application of an appropriate electrical current, which is a very fast method to heat an object. Preferably, the electrical wires at least partially encompass the aforesaid heating and/or cooling pipes representing a possible combination of the pipes and the wires. Metal or alloy wires with a circular cross-section and a suitable electrical resistance per unit length, that results in a desired generation of heat in the wire under applied voltage or current are useable. An appropriate example would be a wire made of nickel-chrome based alloy.

Likewise, it is possible, that the mould comprises areas having only electrical heating wires as heating means and areas having only pipes or pipes as heating and/or cooling means encompassed by electrical heating wires.

The mould has at least one sensor for determining the flow and/or temperature and/or heating power of the heating and/or cooling medium or the heating and/or cooling means itself. In such a manner all process-relevant parameters are being measured and can be monitored. Process-parameters primarily are flow, temperature and heating power of the heating and/or cooling medium or the heating power of the electrical heating wires. Preferably, the sensors are allocated to each of the heating and/or cooling means. Likewise, it is possible, that only particular heating and/or cooling means comprise these sensors. Referring to the above mentioned meander-like structure of the pipes, it is imaginable, that only every second winding features one or more sensor for example.

In another embodiment of the invention, at least one thermal sensor is disposed at or in the inner and/or outer laminate layer for determining the temperature of the inner and/or or outer laminate layer. Thermal sensors permit a fast and precise measurement of temperature or temperature changes respectively within the immediate area of the thermal sensor. A plurality of thermal sensors maybe placed separately or forming arrays on diverse positions within the mould.

It is advisable, if a coupling agent strengthening the bond between the at least one thermal insulating core layer and the inner and/or outer laminate layer is disposed between the at least one thermal insulating core layer and the inner and/or outer laminate layer. Thus, an appropriate bond avoiding delamination between the inner and/or outer laminate layers and the thermal insulating core layer is provided. Coupling agents in terms of the invention maybe usual adhesive or surface activating methods like plasma- or corona-treatments or any combination of these. In case of heating and/or cooling means disposed on top of the thermal insulating core layer layers of chopped strand mat or the like can act as coupling agent and thus enhance the bond between the thermal insulating core layers and the inner and/or outer laminate layers embedding the heating and/or cooling means.

Preferably, the inner and outer laminate layers are made from a fibre composite material, in favour from glass fibre, inorganic fibre or carbon fibre or a combination of said fibres within a cured resin matrix, and the thermal insulating core layer is made from balsa wood, polymeric foam material or a combination of these. Fibre reinforced materials are composite materials made from a polymer matrix reinforced with one or more layers of one or more types of fibres. The fibres are usually based on glass, carbon or aramide, while the matrix comprises usually an epoxy, vinylester or polyester or diverse durable duroplastic or thermoplastic polymers. Specifying the orientation of the reinforcing fibres or layers of fibres can increase the strength and resistance to deformation of the mould, but also the heat conductance of the layers. If need be coupling agents as mentioned above may be provided between single layers or a multi-layer structure. Materials suitable for the inner and/or outer laminate layers generally possess good mechanical properties especially regarding stiffness and rigidity.

The thermal insulating core layer is preferably made from balsa or other types of light weight woods or any polymeric foam material like polyurethane- or polystyrene-based foam or any combination of these. Materials suitable for core layers generally possess low weight and low thermal conductivity.

The thickness of the inner and/or outer laminate layer is within a range of 12 to 4 mm, preferably 8 mm. In comparison to mould known from prior art a reduction of the thickness of the laminate up to 70 % is achievable giving rise to the above mentioned better heating and/or cooling properties of the inventive mould. Of course other dimensions of the inner and/or outer laminate layers are also within the scope of the invention, even though a reduction of thickness is desirable. Furthermore, the invention relates to an apparatus for manufacturing a composite part, especially a wind turbine blade, comprising at least one mould as described above connectable or connected with a heating and/or cooling system with control unit for controlling the heating and/or cooling process of the mould. The inventive apparatus connects the mould with a heating and/or cooling system with a control unit giving rise to an optimised manufacturing, in particular curing process, of the part to be built through providing improved control of the heating and/or cooling, e.g. tempering, of the mould. While manufacturing composite parts strict temperature profiles regarding the curing of the part have to be maintained to obtain high-quality products. This requires an exact adjustment and control of the temperature and/or temperature gradients and if need be other process relevant parameters along the mould. Connecting the inventive mould with a heating and/or cooling system with a control unit makes it possible to optimise manufacturing composite parts and leads to better products in comparison to the existing moulding techniques.

In a preferred embodiment of the invention the mould comprises at least one sensor for determining the flow and/or temperature and/or heating power of the heating and/or cooling medium or the heating and/or cooling means itself and/or at least one thermal sensor disposed at or in the inner and/or outer laminate layer, whereby the control unit is built to receive and process data from the sensor generating control data for controlling the heating and/or cooling system. Thus, the control unit is able to monitor and control all process-relevant parameters from data sent by sensors distributed at diverse positions within the mould. The sensors may, preferably in real time, determine data regarding every process-relevant parameter like the flow and/or temperature and/or heating power of the heating and/or cooling medium or the temperature or heating power of the heating and/or cooling means, e.g. the heating power of the electrical heating wires as well as the temperature or pressure of the fluid flowing through the pipes.

Further, the sensors may send data containing information on one or more process-parameters for example as an input signal to the control unit of the heating and/or cooling system. The input data from at least one sensor is processed and a control data (data set) is generated for controlling the heating and/or cooling system by means of which heating and/or cooling of the mould or parts of it is carried out. In such a manner for example undesired temperature deviations or deviations of other process-parameters are firstly detectable and secondly adjustable on the basis of the control data. Preferably, this takes place in real time. For example, if less heat is provided within one region of the mould, the control data delivers a signal to the heating means which increase the temperature in the according region. Thus, the advantageous control unit embedded or provided with the heating and/or cooling system leads to a better control and adjustability of the temperature of the mould during manufacturing a composite part. The number and arrangement of the moulds comprised by the apparatus is substantially dependent on the geometry of the composite part.

Furthermore, a control unit is adapted to determine and control the degree of cure of the part at least from the data from the thermal sensor. In this embodiment, the control unit is adapted to calculate the degree of cure from the moulded composite part according to the input data from one or more thermal sensors for example disposed in the vicinity of the mould surface using one or more mathematical algorithm(s) or the like in real time. According to the invention the curing process of the composite part being mainly dependent on temperature of the mould is adjustable through the control unit and the heating and/or cooling system controlling and adjusting the heating and/or cooling means and the temperature of the mould.

Likewise, process-time can be shortened as it is clear determinable when curing of the composite part has finished and thus the mould maybe switched from heating to cooling mode by the heating and/or cooling system on the basis of the control data for example. According to the real time input of the temperature or temperature gradients within the mould from the thermal sensors conclusion on the progression of the curing process of the composite part can be made as well as the curing process is controllable by adjusting appropriate temperatures within the mould by the use of the heating and/or cooling means.

The heating and/or cooling system preferably comprises at least one pump and/or at least one valve and/or at least one heating and/or cooling source controlled by the control unit. Thereby, the control unit is adapted to quickly adjust proper mould temperatures according to the employed materials and progression of cure in addition by controlling the heating and/or cooling system. Pumps and valves of the heating and/or cooling system contribute to an accurate control of the heating and/or cooling medium within the heating and/or cooling means and hence the temperature of the mould, preferably according to the progression of cure of the composite part. Likewise, the aforesaid electrical heating wires may be actuated by supplying them with an appropriate electrical current by the heating and/or cooling system. Hence, the control unit and accordingly the heating system incorporates and controls every means for tempering, e.g. heating or cooling, of the mould or along separate areas of the mould respectively.

Moreover, the invention relates to a method for manufacturing a composite part, in particular a wind turbine blade, using the above mentioned apparatus. Along with the inventive apparatus comprising the inventive mould and the inventive heating and/or cooling system with control unit the process of manufacturing of composite parts is significantly improved in terms of control and duration of the process predominantly based on a relative fast adjustability of the temperature of the mould both for heating and cooling due to its comparatively thin inner and/or outer laminate layer giving raise to quick heat transfer from the heat source to the moulded composite part placed within a specific mould cavity exposed within the mould. Preferably, the apparatus comprises an upper and a lower mould part.

Preferably, a control unit receives and processes data from at least one sensor for determining the flow and/or temperature and/or heating power of the heating and/or cooling medium or the heating and/or cooling means itself and/or from at least one thermal sensor and generates control data (data set) for controlling the heating and/or cooling system. The control system in favour permanently receives information on all process-relevant parameters concerning flow, temperature and heating power of the heating and/or cooling medium and/or the heating and/or cooling means itself permanently sent by the sensors by means of which the control unit generates control data for controlling the heating and/or cooling system. Hence, the control unit performs a real-time monitoring and if need be an optimisation of all process-relevant parameters of the manufacturing process predominantly through quick and exact adjustment of the temperature of the mould.

Favourably, the control unit determines the degree of cure of the composite part at least from the data from the thermal sensor which leads to a further optimised process of manufacturing composite parts due to fast adjustment of the temperature through the heating and/or cooling system with the associated control unit capable of determining and predicting the progression of the curing process, e.g. the progress of the degree of cure of the composite part by means of mathematical algorithms implemented in the control unit. The curing process may be controlled or influenced by quick tempering of separate areas of the mould or the entire mould using the heating and/or cooling system. After the part has completely cured, which is also detectable by the control unit based mainly on the data from the thermal sensors, cooling of the mould is instantly initiated and the cured composite part maybe released from the mould.

In the following the invention is described in detail as reference is made to the figures, whereby
- fig. 1: shows a principal cross sectional view of an inventive mould,
- fig. 2: shows a principal view of an inventive apparatus and
- fig. 3: shows a perspective view of an inventive mould part for manufacturing a wind turbine blade.

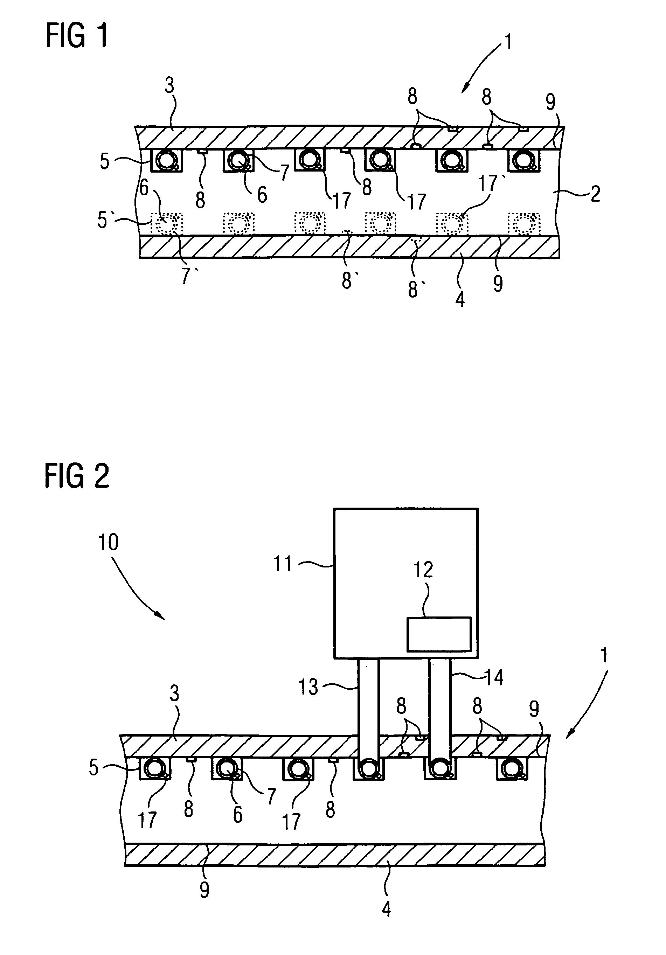

Fig. 1 shows a principal cross-sectional view of an inventive mould 1 clearly demonstrating the sandwich-like structure of the mould 1. The mould 1 comprises a thermal insulating core layer 2 made from thermal insulating polymeric foam material, like polyurethane foam for example, or as preferable made from balsa wood disposed between inner and outer laminate layers 3, 4 both made from a clutch, e.g. a plurality of layers placed in certain directions of glass fibres in a resin-like polyurethane matrix. If need be, inner and outer laminate layers 3, 4 may differ in their materials, so that the inner laminate layer 3 may be made from a carbon composite material and the outer laminate layer 4 may be made from glass fibre or any other composite material for example. An adhesive layer 9 is strengthening the bond between the thermal insulating core layer 2 and the inner and outer laminate layers 3, 4. The adhesive layer 9 is disposed in between the thermal insulating core layer 2 and the inner and outer laminate layers 3, 4.

Recesses in form of cut-outs 5 are disposed within the thermal insulating core layer 2 in contact to the inner laminate layer 3 accommodating pipes 6 each encompassed by electrical wires 7 wound around the pipes 6 acting as heating and/or cooling means by transporting a heating and/or cooling medium like water for example. Due to a reduced thickness of the inner and outer laminate layer 3, 4 the mould 1 exhibits quicker response to heating or cooling respectively giving rise to a shortened process of manufacturing a composite part. The thickness of the inner and outer laminate layers 3, 4 is approximately 8 mm.

Dotted lines indicate an optional arrangement of additional cut-outs 5', pipes 6' and electrical wires 7' disposed in contact to the outer laminate layer 4, which maybe of advantage as they avoid the occurrence of thermal induced stress within the mould 1 due to temperature gradients between the inner and outer laminate layers 3, 4.

The pipes 6, 6' are arranged within the mould 1 in a wound, meander-like structure. The pipes 6' and electrical wires 7' maybe deemed as an additional heating and/or cooling cycle or otherwise may be connected to the pipes 6 and electrical wires 7 forming a combined heating and/or cooling cycle.

Sensors 17 for determining the flow and/or temperature and/or heating power of the heating and/or cooling medium flowing through the pipes 6, 6' or the heating and/or cooling means itself are related to the pipes, 6, 6' or the electrical wires 7, 7'. Thus, for example a permanent or intermitting measurement of temperature, pressure, flow of water or any other liquid acting as heating or cooling medium respectively floating through the pipes 6, 6' is achievable. Moreover, the temperature or heating power of the electrical wires 7, 7' is measurable. Analogous sensors 17' may be provided as well.

Besides, thermal sensors 8, 8' are distributed at certain locations within the mould 1. Fig. 1 shows thermal sensors 8 disposed at and in the inner laminate layer 3, which determine the temperature as specific locations within this area of the mould 1. As can be seen, thermal sensors 8 can also be integrated within the inner laminate layer 3 or at the mould surface. Thermal sensors 8' (dotted) may be present at hand in the outer laminate layer 4 as well.

Fig. 2 shows a principal view of an inventive apparatus 10 comprising a mould 1 connected to a heating and/or cooling system 11 with an associated control unit 12 for controlling the heating and/or cooling process of the mould 1. Therefore, the heating and/or cooling system 11 comprises one or more pumps or one or more valves and one or more heating and/or cooling sources like usual heaters or coolers for heating or cooling a circulating fluid to a desired temperature before letting it flow through the pipes (all not shown). An appropriate connector means for connecting the heating and/or cooling system 11 to the mould 1 like input and output lines 13, 14 is provided. The heating and/or cooling system 11 and the pipes 6 are a closed cycle in which the medium circulates. According to the invention it is feasible to monitor all process-relevant parameters in real time as the mould 1 comprises sensors 17 for determining the flow and/or temperature and/or heating power of the heating and/or cooling medium or the heating and/or cooling means itself and/or at least one thermal sensor 8 disposed at or in the inner and/or outer laminate layer 3, 4 permanently or intermittently sending signals to the control unit 12 through appropriate sending and receiving units in the form of cable or wireless connection means. The control unit 12 receives and processes data from the sensors 8, 17 and generates control data (data set) for controlling the heating and/or cooling system 11. As an example, the control data generated by the control unit 12 on base of the input signals from the thermal sensors 8 gives rise to heat the entire mould 1 or merely parts of it. Thus, pumps are actuated to supply more heated or cooled fluid through the pipes 6 heating or cooling the mould 1 or parts of it respectively. Additionally, the electrical wires 7 maybe supplied with a higher or lower electrical current increasing or decreasing their heating power in same manner.

It is possible, that the control unit 12 is adapted to determine the degree of cure of a moulded composite part from the data sent from the thermal sensors 8 using mathematical algorithms. This gives rise to a plurality of advantages concerning better products as every product is completely cured after being released from the mould 1, shorter process-times, as it can be concisely determined when curing of the part has finished, as well as better control of the curing process, e.g. that temperature and following curing deviations are detectable and maybe corrected by the associated heating and/or cooling system 11 giving rise to an isotropic heating and/or cooling of the mould and the curing of the composite part in addition.

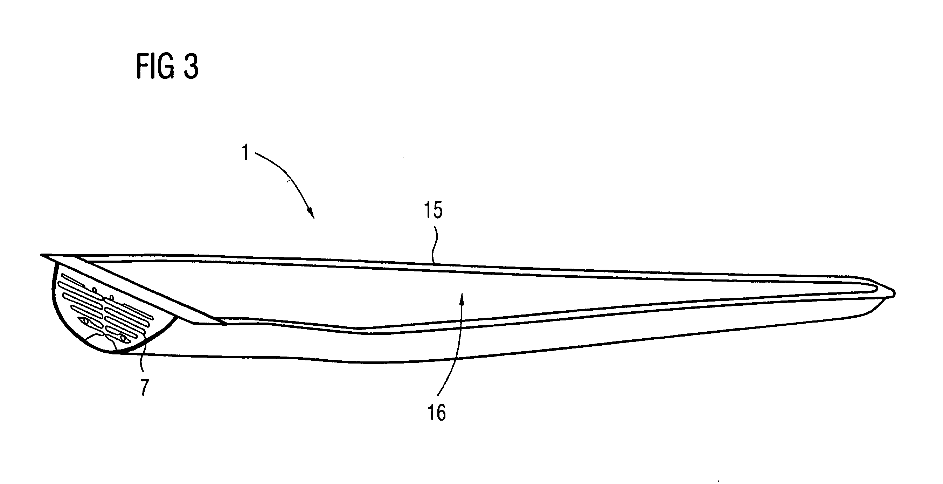

Fig. 3 shows a perspective view of an inventive mould part 15 for manufacturing a wind turbine blade. Of course all other types and forms of composite parts maybe manufactured with the inventive mould and the inventive apparatus respectively. Shown is only one part 15 of the mould 1, whereby the missing part essentially has the same shape as the part 15. Both parts form a mould cavity 16, in which fibre materials and if need be a mould core (both not shown) are placed and after closing the mould and if need be applying a vacuum a resin-like curable matrix is injected. The temperature is increased in the following initiating the curing process. All process-relevant data is sent in real time from diverse sensors distributed within the mould due the control unit 12 (cf. fig. 2), which receives, processes and monitors the input data and generates a control data for controlling the heating and/or cooling system 11 (cf. fig. 2) to individually adjust the temperature of the mould or separate parts of it.

Moreover, the inventive method also offers a determination of the degree of cure of the moulded part in whole or in parts through the input data at least from the thermal sensors 8, 8' (fig. 1, 2) using specific algorithms giving conclusions on the curing process.

The invention offers fast and precise adjustability of temperature of the mould 1 or parts of it by means of the heating and/or cooling system 11 with the associated control unit 12 and even allows determining and influencing the degree of cure of the moulded composite part through an interaction of the control unit and the heating and/or cooling system with the mould 1.

## Claims

1. Mould (1) for manufacturing a composite part including at least one fibre reinforced matrix, in particular a wind turbine blade, comprising
- at least one thermal insulating core layer (2) disposed between at least one inner laminate layer (3) and at least one outer laminate layer (4) and
- at least one heating and/or cooling means disposed in contact or in close proximity to the inner and/or outer laminate layer (3, 4), whereby
- the heating and/or cooling means comprises at least one pipe (6, 6') for transporting a heating and/or cooling medium, and
- the mould (1) comprises at least one sensor (17, 17') for determining the flow and/or heating power of the heating and/or cooling medium.

2. Mould according to claim 1, wherein the heating and/or cooling means is disposed in at least one recess (5, 5') within the thermal insulating core layer (2) and/or the inner and/or the outer laminate layer (3, 4), or is disposed on top of the thermal insulating core layer (2) or is moulded into the thermal insulating core layer (2) and/or the inner and/or outer the laminate layer (3, 4).

3. Mould according to claim 1 or 2, wherein the heating and/or cooling means comprises electrical heating wires (7, 7'), whereby preferably the pipes (6, 6') are at least partially encompassed by the electrical heating wires (7, 7').

4. Mould according to one of the preceding claims, having at least one sensor (17, 17') for determining the temperature of the heating and/or cooling medium or the heating and/or cooling means itself.

5. Mould according to one of the preceding claims, wherein at least one thermal sensor (8, 8') is disposed at or in the inner and/or outer laminate layer (3, 4) for determining the temperature of the inner and/or outer layer (3, 4).

6. Mould according to one of the preceding claims, wherein a coupling agent (9) strengthening the bond between the at least one thermal insulating core layer (2) and the inner and/or outer laminate layer (3, 4) is disposed between the at least one thermal insulating core layer (2) and the inner and/or outer laminate layer (3, 4).

7. Mould according to one of the preceding claims, wherein the inner and outer laminate layers (3, 4) are made from a fibre composite material, preferably from glass fibre, inorganic fibre or carbon fibre or a combination of said fibres within a cured resin matrix, and the thermal insulating core layer (2) is made from balsa wood, polymeric foam material or a combination of these.

8. Mould according to one of the preceding claims, wherein the thickness of the inner and/or outer laminate layer (3, 4) is within a range of 12 to 4 mm, preferably 8 mm.

9. Apparatus for manufacturing a composite part, especially a wind turbine blade, comprising at least one mould (1) according to one of the preceding claims connectable or connected with a heating and/or cooling system (11) with control unit (12) for controlling the heating and/or cooling process of the mould (1).

10. Apparatus according to claim 9, wherein the mould (1) comprises at least one sensor (17) for determining the flow and/or temperature and/or heating power of the heating and/or cooling medium or the heating and/or cooling means itself and/or at least one thermal sensor (8) disposed at or in the inner and/or outer laminate layer (3, 4), whereby the control unit (12) is built to receive and process data from the sensors (17, 8) generating control data for controlling the heating and/or cooling system (11).

11. Apparatus according to claim 9, wherein the control unit (12) is adapted to determine and control the degree of cure of the part at least from the data from the thermal sensor (8).

12. Apparatus according to one of the claims 9 to 11, wherein the heating and/or cooling system (11) comprises at least one pump and/or at least one valve and/or at least one heating and/or cooling source controlled by the control unit (12).

13. Method for manufacturing a composite part, in particular a wind turbine blade, using the apparatus (10) according to one of the claims 9 to 12.

14. Method according to claim 13, wherein the control unit (12) receives and processes data from at least one sensor (17) for determining the flow and/or temperature and/or heating power of the heating and/or cooling medium or the heating and/or cooling means itself and/or from at least one thermal sensor (8) and generates control data for controlling the heating and/or cooling system (11).

15. Method according to claim 13 or 14, wherein the control unit (12) determines the degree of cure of the composite part at least from the data from the thermal sensor (8).

## Patentansprüche

1. Gussform (1) zur Herstellung eines Verbundteils, das mindestens eine faserverstärkte Matrix enthält, insbesondere eines Windkraftanlagen-Rotorblatts, welche umfasst:
- mindestens eine wärmeisolierende Kernschicht (2), die zwischen mindestens einer inneren Laminatschicht (3) und mindestens einer äußeren Laminatschicht (4) angeordnet ist, und
- mindestens ein Heiz- und/oder Kühlmittel, das in Kontakt oder in unmittelbarer Nähe der inneren und/oder äußeren Laminatschicht (3, 4) angeordnet ist, wobei
- das Heiz- und/oder Kühlmittel mindestens ein Rohr (6, 6') zum Transportieren eines Heiz- und/oder Kühlmediums umfasst, und
- die Gussform (1) mindestens einen Sensor (17, 17') zum Bestimmen der Durchflussmenge und/oder der Heizleistung des Heiz- und/oder Kühlmediums umfasst.

2. Gussform nach Anspruch 1, wobei das Heiz- und/oder Kühlmittel in mindestens einer Vertiefung (5, 5') innerhalb der wärmeisolierenden Kernschicht (2) und/oder der inneren und/oder der äußeren Laminatschicht (3, 4) angeordnet ist oder oben auf der wärmeisolierenden Kernschicht (2) angeordnet ist oder in die wärmeisolierende Kernschicht (2) und/oder die innere und/oder die äußere Laminatschicht (3, 4) eingegossen ist.

3. Gussform nach Anspruch 1 oder 2, wobei das Heiz- und/oder Kühlmittel elektrische Heizdrähte (7, 7') umfasst, wobei vorzugsweise die Rohre (6, 6') wenigstens teilweise von den elektrischen Heizdrähten (7, 7') umgeben sind.

4. Gussform nach einem der vorhergehenden Ansprüche, welche mindestens einen Sensor (17, 17') zum Bestimmen der Temperatur des Heiz- und/oder Kühlmediums und/oder des Heiz- und/oder Kühlmittels selbst aufweist.

5. Gussform nach einem der vorhergehenden Ansprüche, wobei mindestens ein Temperatursensor (8, 8') an oder in der inneren und/oder äußeren Laminatschicht (3, 4) angeordnet ist, zum Bestimmen der Temperatur der inneren und/oder äußeren Laminatschicht (3, 4).

6. Gussform nach einem der vorhergehenden Ansprüche, wobei ein Kopplungsmittel (9), das die Bindung zwischen der mindestens einen wärmeisolierenden Kernschicht (2) und der inneren und/oder äußeren Laminatschicht (3, 4) verstärkt, zwischen der mindestens einen wärmeisolierenden Kernschicht (2) und der inneren und/oder äußeren Laminatschicht (3, 4) angeordnet ist.

7. Gussform nach einem der vorhergehenden Ansprüche, wobei die innere und die äußere Laminatschicht (3, 4) aus einem Faserverbundmaterial, vorzugsweise aus Glasfaser, anorganischer Faser oder Kohlefaser oder einer Kombination der besagten Fasern innerhalb einer gehärteten Harzmatrix, hergestellt sind und die wärmeisolierende Kernschicht (2) aus Balsaholz, Polymerschaumstoff oder einer Kombination davon hergestellt ist.

8. Gussform nach einem der vorhergehenden Ansprüche, wobei die Dicke der inneren und/oder äußeren Laminatschicht (3, 4) innerhalb eines Bereiches von 12 bis 4 mm liegt und vorzugsweise 8 mm beträgt.

9. Vorrichtung zur Herstellung eines Verbundteils, insbesondere eines Windkraftanlagen-Rotorblatts, welche mindestens eine Gussform (1) nach einem der vorhergehenden Ansprüche umfasst, die mit einem Heiz- und/oder Kühlsystem (11) mit einer Steuereinheit (12) zur Steuerung des Heiz - und/oder Kühlvorgangs der Gussform (1) verbindbar oder verbunden ist.

10. Vorrichtung nach Anspruch 9, wobei die Gussform (1) mindestens einen Sensor (17) zum Bestimmen der Durchflussmenge und/oder Temperatur und/oder Heizleistung des Heiz- und/oder Kühlmediums und/oder des Heiz- und/oder Kühlmittels selbst und/oder mindestens einen Temperatursensor (8), der an oder in der inneren und/oder äußeren Laminatschicht (3, 4) angeordnet ist, aufweist, wobei die Steuereinheit (12) dafür ausgebildet ist, Daten von den Sensoren (17, 8) zu empfangen und zu verarbeiten und Steuerungsdaten zur Steuerung des Heiz - und/oder Kühlsystems (11) zu erzeugen.

11. Vorrichtung nach Anspruch 9, wobei die Steuereinheit (12) dazu eingerichtet ist, den Aushärtungsgrad des Teils wenigstens aus den Daten von dem Temperatursensor (8) zu bestimmen.

12. Vorrichtung nach einem der Ansprüche 9 bis 11, wobei das Heiz- und/oder Kühlsystem (11) mindestens eine Pumpe und/oder mindestens ein Ventil und/oder mindestens eine Heiz- und/oder Kühlquelle, die von der Steuereinheit (12) gesteuert wird, umfasst.

13. Verfahren zur Herstellung eines Verbundteils, insbesondere eines Windkraftanlagen-Rotorblatts, unter Verwendung der Vorrichtung (10) nach einem der Ansprüche 9 bis 12.

14. Verfahren nach Anspruch 13, wobei die Steuereinheit (12) Daten von mindestens einem Sensor (17) zum Bestimmen der Durchflussmenge und/oder Temperatur und/oder Heizleistung des Heiz- und/oder Kühlmediums und/oder des Heiz- und/oder Kühlmittels selbst und/oder von mindestens einem Temperatursensor (8) empfängt und verarbeitet und Steuerungsdaten zur Steuerung des Heiz- und/oder Kühlsystems (11) erzeugt.

15. Verfahren nach Anspruch 13 oder 14, wobei die Steuereinheit (12) den Aushärtungsgrad des Verbundteils wenigstens aus den Daten von dem Temperatursensor (8) bestimmt.

## Revendications

1. Moule (1) pour fabriquer une pièce composite incluant au moins une matrice renforcée par des fibres, en particulier une pale d'éolienne, comprenant
- au moins une couche de coeur d'isolation thermique (2) disposée entre au moins une couche stratifiée intérieure (3) et au moins une couche stratifiée extérieure (4) et
- au moins un moyen de chauffage et/ou de refroidissement disposé en contact avec ou en étroite proximité de la couche stratifiée intérieure et/ou extérieure (3, 4), par lequel
- le moyen de chauffage et/ou de refroidissement comprend au moins un tuyau (6, 6') pour transporter un milieu de chauffage et/ou de refroidissement, et
- le moule (1) comprend au moins un capteur (17, 17') pour déterminer le débit et/ou la puissance calorifique du milieu de chauffage et/ou de refroidissement.

2. Moule selon la revendication 1, dans lequel le moyen de chauffage et/ou de refroidissement est disposé dans au moins un renfoncement (5, 5') au sein de la couche de coeur d'isolation thermique (2) et/ou de la couche stratifiée intérieure et/ou extérieure (3, 4), ou bien est disposé pardessus la couche de coeur d'isolation thermique (2) ou est moulé à l'intérieur de la couche de coeur d'isolation thermique (2) et/ou de la couche stratifiée intérieure et/ou extérieure (3, 4).

3. Moule selon la revendication 1 ou 2, dans lequel le moyen de chauffage et/ou de refroidissement comprend des fils chauffants électriques (7, 7'), ce par quoi, préférablement, les tuyaux (6, 6') sont au moins partiellement cernés par les fils chauffants électriques (7, 7').

4. Moule selon l'une des revendications précédentes, ayant au moins un capteur (17, 17') pour déterminer la température du milieu de chauffage et/ou de refroidissement ou du moyen de chauffage et/ou de refroidissement lui-même.

5. Moule selon l'une des revendications précédentes, dans lequel au moins un capteur thermique (8, 8') est disposé au niveau de ou dans la couche stratifiée intérieure et/ou extérieure (3, 4) pour déterminer la température de la couche stratifiée intérieure et/ou extérieure (3, 4).

6. Moule selon l'une des revendications précédentes, dans lequel un agent de couplage (9) renforçant la liaison entre l'au moins une couche de coeur d'isolation thermique (2) et la couche stratifiée intérieure et/ou extérieure (3, 4) est disposé entre l'au moins une couche de coeur d'isolation thermique (2) et la couche stratifiée intérieure et/ou extérieure (3, 4).

7. Moule selon l'une des revendications précédentes, dans lequel les couches stratifiées intérieure et extérieure (3, 4) sont constituées d'un matériau composite fibreux, préférablement d'une fibre de verre, d'une fibre inorganique ou d'une fibre de carbone ou d'une combinaison desdites fibres au sein d'une matrice de résine durcie, et la couche de coeur d'isolation thermique (2) est constituée de balsa, d'un matériau de mousse polymérique ou d'une combinaison de ceux-ci .

8. Moule selon l'une des revendications précédentes, dans lequel l'épaisseur de la couche stratifiée intérieure et/ou extérieure (3, 4) est dans une plage de 12 à 4 mm, préférablement 8 mm.

9. Appareil pour fabriquer une pièce composite, spécialement une pale d'éolienne, comprenant au moins un moule (1) selon l'une des revendications précédentes pouvant être connecté ou étant connecté avec un système de chauffage et/ou de refroidissement (11) avec une unité de commande (12) pour commander le processus de chauffage et/ou de refroidissement du moule (1).

10. Appareil selon la revendication 9, dans lequel le moule (1) comprend au moins un capteur (17) pour déterminer le débit et/ou la température et/ou la puissance calorifique du chauffage et/ou de refroidissement ou du moyen de chauffage et/ou de refroidissement lui-même et/ou au moins un capteur thermique (8) disposé au niveau de ou dans la couche stratifiée intérieure et/ou extérieure (3, 4), ce par quoi l'unité de commande (12) est construite pour recevoir et traiter des données provenant des capteurs (17, 8) générant des données de commande pour commander le système de chauffage et/ou de refroidissement (11).

11. Appareil selon la revendication 9, dans lequel l'unité de commande (12) est adaptée à déterminer et commander le degré de durcissement de la pièce au moins à partir des données provenant du capteur thermique (8).

12. Appareil selon l'une des revendications 9 à 11, dans lequel le système de chauffage et/ou de refroidissement (11) comprend au moins une pompe et/ou au moins une soupape et/ou au moins une source de chauffage et/ou de refroidissement commandée(s) par l'unité de commande (12).

13. Procédé pour fabriquer une pièce composite, en particulier une pale d'éolienne, en utilisant l'appareil (10) selon l'une des revendications 9 à 12.

14. Procédé selon la revendication 13, dans lequel l'unité de commande (12) reçoit et traite des données provenant d'au moins un capteur (17) pour déterminer le débit et/ou la température et/ou la puissance calorifique du milieu de chauffage et/ou de refroidissement ou du moyen de chauffage et/ou de refroidissement lui-même et/ou d'au moins un capteur thermique (8) et génère des données de commande pour commander le système de chauffage et/ou de refroidissement (11).

15. Procédé selon la revendication 13 ou 14, dans lequel l'unité de commande (12) détermine le degré de durcissement de la pièce composite au moins à partir des données provenant du capteur thermique (8).
